# EUROPEAN PATENT APPLICATION

(11) **EP 4 663 578 A1**
(43) Date of publication of application: **17.12.2025**
(21) Application number: 24181402.9
(22) Date of filing: 11.06.2024
(51) Int. Cl.: B65G 1/04, B65G 1/06, B65G 47/52

(54) **A LIFT WAGON**

(71) Applicant: AutoStore Technology AS, 5578 Nedre Vats (NO)
(72) Inventor: Austrheim, Trond, Nedre Vats (NO)
(74) Representative: Kilburn & Strode LLP

(57) **Abstract**

The disclosure relates to a lift wagon for vertically conveying product containers in an automated storage and retrieval system, including a horizontal conveyor

## Description

### TECHNICAL FIELD

The disclosure relates to a lift wagon. More particularly, it relates to a lift wagon, a lift assembly, an automated storage and retrieval system and a method.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

In some configurations the automated storage and retrieval system can comprise multiple three-dimensional grids vertically displaced relative to each other, with appropriate arrangements to shift containers between respective grids.

Where the system consists of grids in more than one level and bins are exchanged between them, improved throughput is desirable.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a storage system comprising multiple grids vertically disposed relative to one another;
Fig. 6 shows a lift assembly for the storage system of Fig. 5;
Fig. 7 shows the lift assembly and multiple grid assembly in a fully installed configuration;
Fig. 8 shows a lift assembly and storage grid in a perspective view;
Fig. 9a shows a multiple grid configuration with more than two grids vertically disposed relative to each other;
Fig. 9b is a perspective view of the arrangement of Fig. 9a; and
Figs. 10a and 10b show a storage system according to embodiments in first and second configurations.

### DETAILED DESCRIPTION

In overview, the disclosure relates to a lift wagon, or lift, or lift compartment for a bin lift, or bin elevator. The wagon is arranged to vertically convey product containers in an automated storage and retrieval system, for example between vertically spaced grids. The lift wagon includes a horizontal conveyor. As a result, bins or containers can be placed on the lift wagon using adjacent conveyors either side or end of the lift in cooperation with the lift wagon horizontal conveyor rather than, for example, relying on robots directly placing the bins on the lift wagon. By shifting bins from the lift wagon conveyor onto an exit conveyor while shifting bins from an in-feed conveyor simultaneously onto to the lift wagon conveyor, throughput is yet further enhanced.

### Automated storage and retrieval system overview

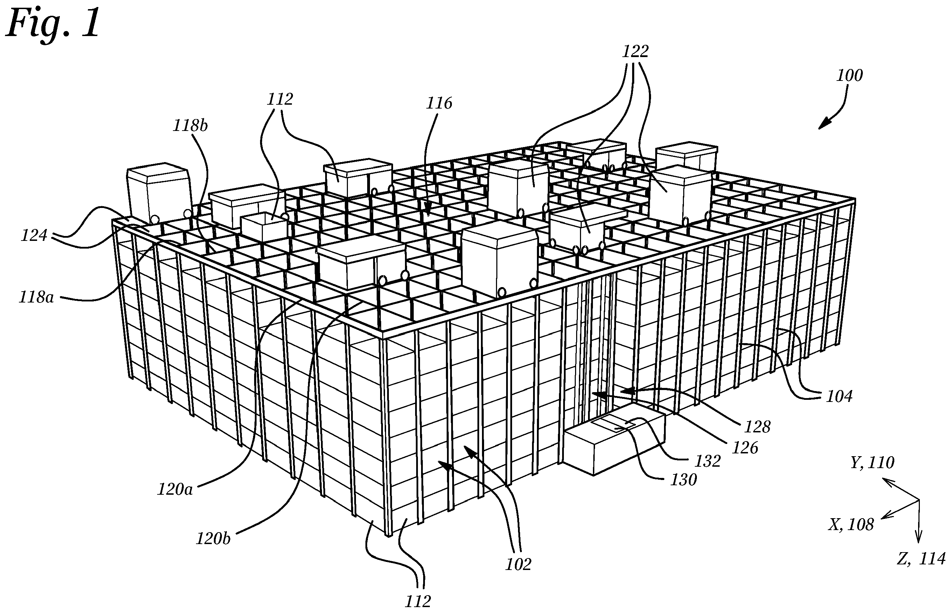

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

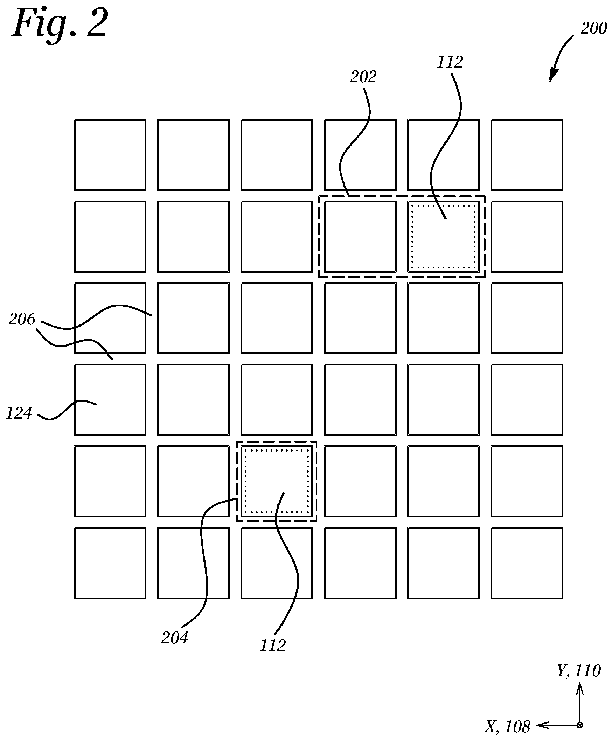

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

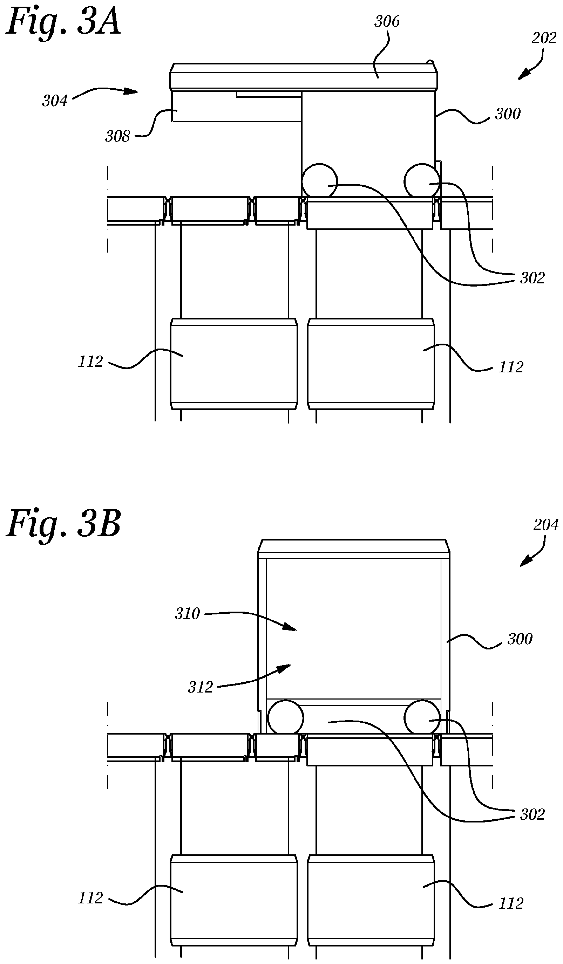

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

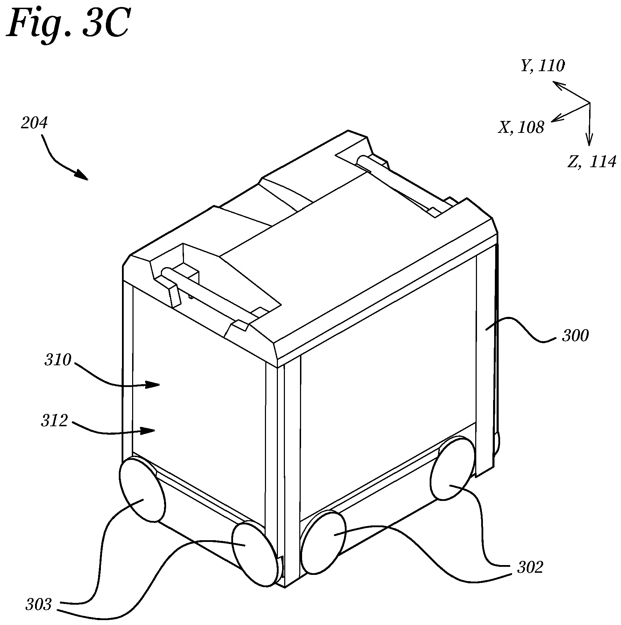

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

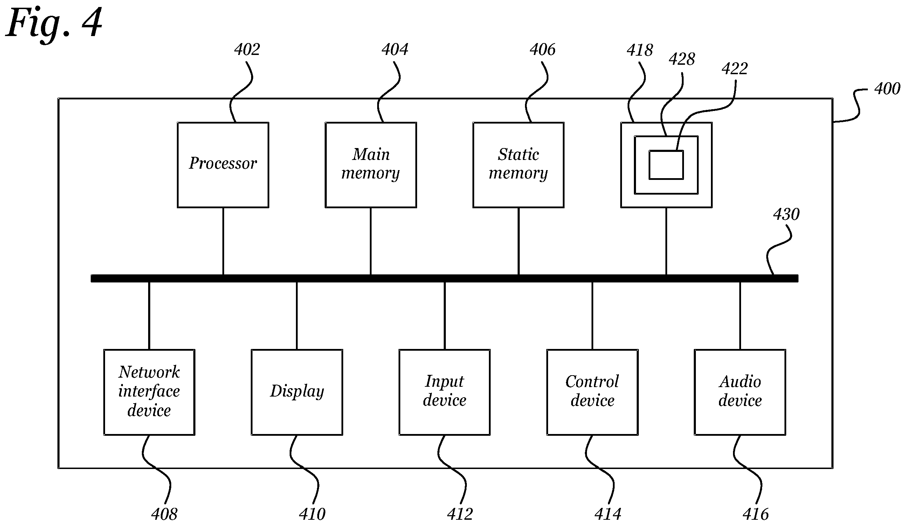

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Lift wagon/assembly

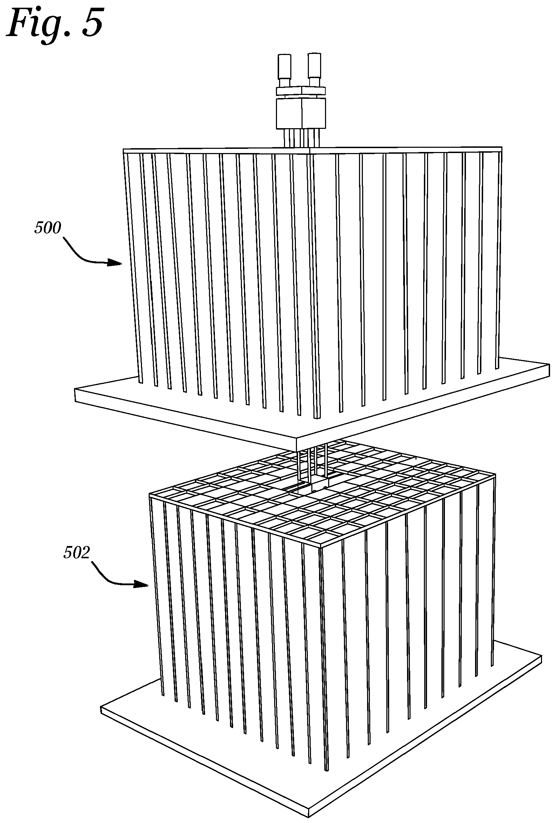

Referring to Figs. 5-9, a lift wagon, lift assembly and automated storage and retrieval system according to embodiments are shown. Referring to Fig. 5, an upper grid 500 of the type described above is shown, vertically disposed over a lower grid 502. It will be appreciated that the grids 500, 502 can be of identical or different configuration and dimension, and directly or indirectly or partially vertically spaced, that is to say, directly above each other, partially above each other or vertically spaced but not one above the other.

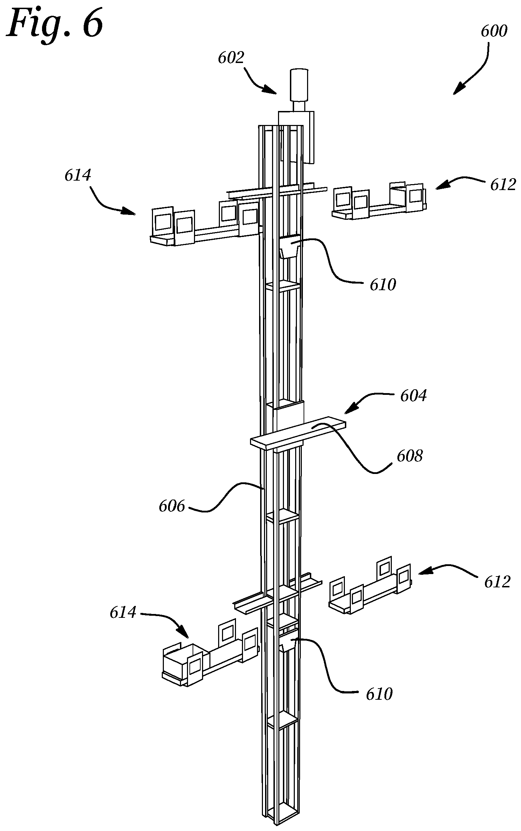

Referring to Fig. 6, a lift assembly designated generally 600 is shown. The assembly includes a drive mechanism 602 for example a hoist drive station for lifting and lowering a lift wagon 604 on an appropriate guide such as vertically disposed bin lift rails 606. As described in more detail below, the lift wagon 604 is arranged for vertically conveying product containers (not shown in Fig. 6) in the automated storage and retrieval system and includes a horizontal conveyor 608. The lift wagon can be lifted and lowered between stop stations 610 for cooperation with an in-feed conveyor 612 and exit conveyor 614. It will be noted that the in-feed and exit conveyor positions can be swapped as appropriate. The lift wagon horizontal conveyor 608 is configured to receive and deliver a plurality of product containers from the in-feed conveyor 612 to the exit conveyor 614 respectively.

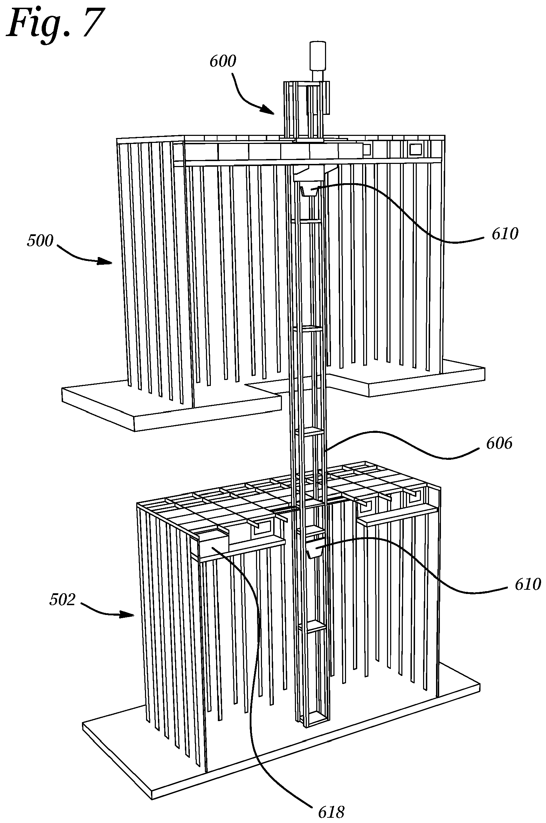

Referring to Fig. 7, where like reference numerals denote like elements, it can be seen that the bin lift assembly 600 permits conveying of containers 618 between the upper and lower grids 500, 502 as described in more detail below.

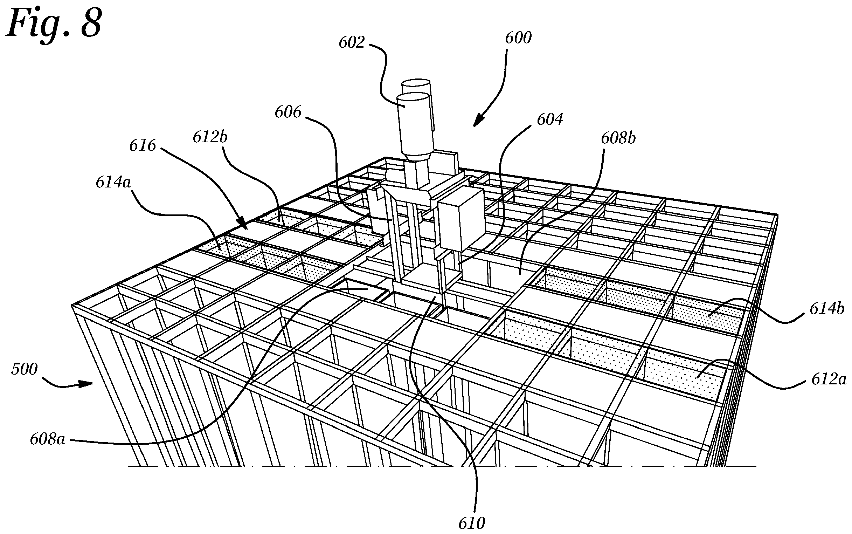

Fig. 8 shows an automated storage and retrieval system according to one configuration in which the lift assembly 600 includes a lift wagon 604 atop the upper grid 500. In the embodiment shown, the lift wagon includes first and second conveyors 608a, 608b disposed either side of the bin lift rails 606. In other configurations, the conveyor can centrally be disposed relative to rails or disposed only on one side of the rails. Additionally, the conveyor 608a, 608b is configured to receive, convey and deliver three containers simultaneously but it will be appreciated that the conveyor can be configured to receive any number of product containers.

The lift wagon 604 further includes a conveyor drive (not shown). The conveyor drive can be of any appropriate type as will be well known to the skilled person and can be driven by a conveyor drive power supply maintained on the lift wagon 604. Alternatively, or additionally, the stop station 610 can include a power supply to power the conveyor drive, or a power supply charger to provide power to the conveyor or the conveyor power supply when the lift wagon 604 is at a stop position. The lift assembly or automated storage and retrieval system further includes respective insertion or in-feed conveyors 612a, 612b at ends of and for cooperating with respective lift wagon conveyor 608a, 608b, and respective extraction or exit conveyors 614a, 614b cooperating with respective lift wagon conveyors 608a, 608b. It will be appreciated that the container carrying capacity of the insertion and extraction conveyors 612, 614, and the number of insertion and extraction conveyors 612, 614, will typically match the capacity and configuration of the lift wagon conveyor 608.

In the specific arrangement shown, the insertion or in-feed conveyors 612a, 612b, which can be considered "put" conveyors 608 can be switched with each other or with the extraction or exit or "get" conveyors 614.

An insertion conveyor adjacent one lift wagon conveyor end can be placed on the same side of the lift wagon as an extraction conveyor adjacent the other lift wagon conveyor end to provide optimised driving configuration for robots positioned therebetween placing containers on the insertion conveyor 612, and removing containers from the extraction conveyors 614 such that a robot can put a bin, that is deliver a container, to an insertion conveyor 612 and then remove a container from an extraction container with minimal driving. In particular, as can be seen in Fig. 8, where the lift wagon includes multiple conveyors 608, the robot can be located at position 616, for example, between an insertion conveyor 612b and an extraction conveyor 614a on the same side of the lift wagon 604. As a result, the lift assembly provides an insertion and/or extraction conveyor at and either side of a lift wagon stop location arranged to convey a product container to and/from the lift wagon conveyor and can additionally comprise first and second insertion and/or extraction conveyors disposed at opposite ends of the lift wagon conveyor, configured to receive a plurality of product containers.

The lift assembly can further include a lift wagon signal connection at a lift wagon stop location (not shown) for providing control information to the lift wagon and/or conveyor, and receiving control data from the lift wagon and/or conveyor. The provision of the stop station 610, in addition to transmission of both current and signal to/from the conveyor drive or motor, provides a location for resting the lift wagon while the bins are being driven off/on the lift wagon. For example, this can be achieved without requiring additional power cabling or signal cabling between a lift wagon and a control cabinet.

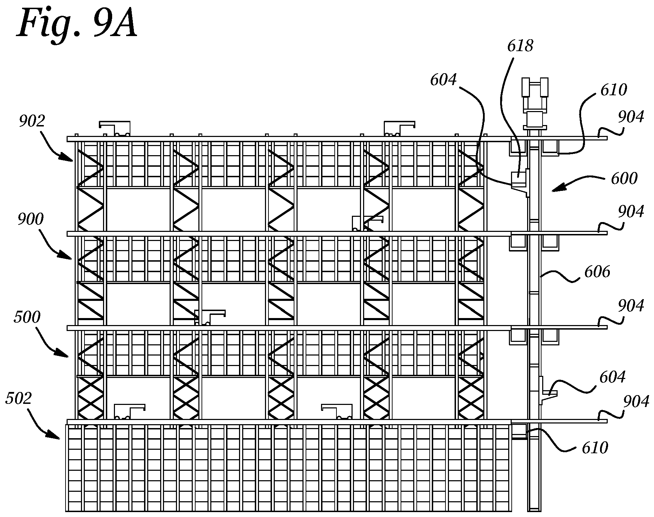

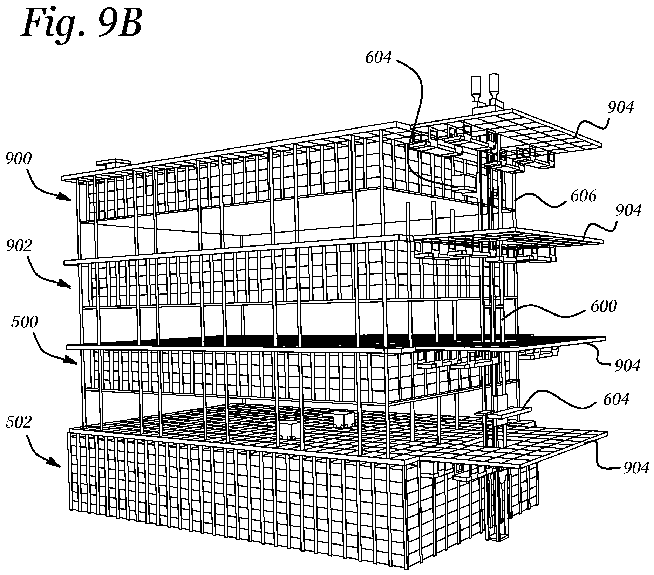

Referring to Figs. 9a and 9b, it will be seen that the automated storage and retrieval system comprises a first grid or product container storage section 500 and a second product container storage section or grid 502 vertically spaced therefrom, the lift assembly 600 further being arranged to lift the lift wagon 604 between the sections such that the insertion conveyor 612 and extraction conveyor 614 can be disposed on the product container storage section at a lift wagon stop location 610. In the embodiment shown it can further be seen that lift wagons 604 are provided either side of the lift rails 606 and separably moveable and, one unloaded and another loaded with a container 618.

In the arrangement shown, the lift assembly 600 is shown exterior to the grids 500, 502 with an extension 904 of the horizontal rail sections to allow conveying of containers to and from the assembly. It will be appreciated that in other configurations the lift assembly 600 can be provided within the volume of the grid. It will further be seen from Figs. 9a, 9b that a multi-level grid system can include additional grids 900, 902 and it will be appreciated any appropriate number of vertically spaced grids can be provided with a stop station set up for each level. The bin lift rails or frame 606 can be supported at ground level such that deflections in upper grids will not affect the structure of the bin lift in such configurations.

### A method of conveying product containers

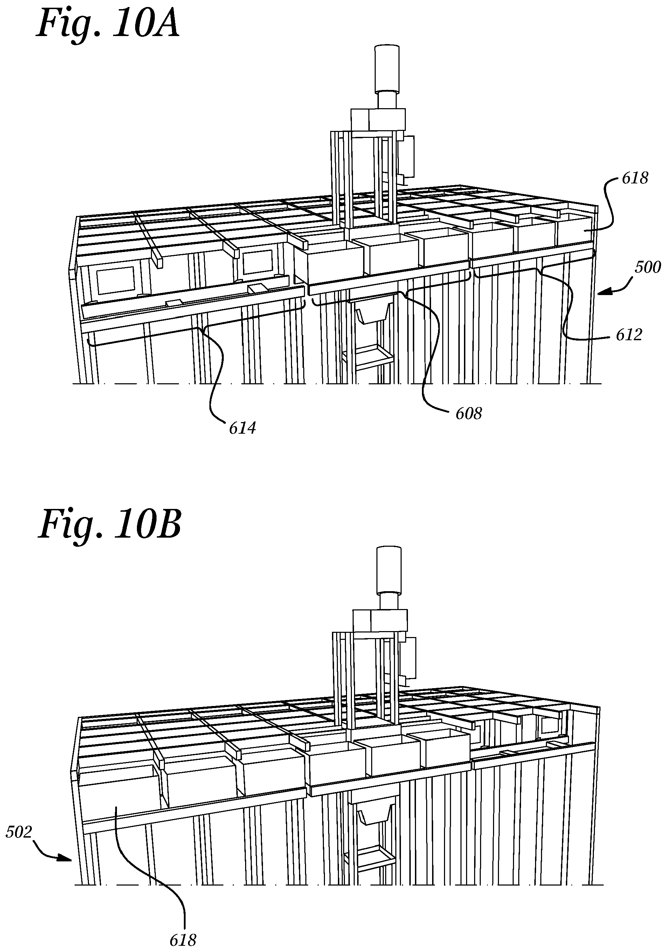

The method of conveying the product containers between the first product container section 500 and the second product storage container section 502 can be further understood with reference to Figs. 10a, 10b. As previously described, the product container 618 is conveyed from an insertion conveyor 612 to a lift wagon 608, the lift wagon 608 is then lifted between storage sections 500, 502 and the product container is conveyed from the lift wagon 608 to an extraction conveyor 614 by cooperation of the conveyors simultaneously. As shown in Fig. 10a, three bins or containers 618 are placed by a robot (not shown) on the in-feed conveyor 612, the lift wagon 608 is lifted to the top position, the conveyors 612 and 608 are aligned and start to convey the containers 618 on the lift wagon container 608 to the exit conveyor 614 whilst simultaneously conveying the containers 618 on the in-feed conveyor 612 to the lift wagon conveyor 608.

As can be seen in Fig. 10b, the bins which had been delivered from the lower grid by the lift wagon 608 are moved onto the exit conveyor 614, the bins from the in-feed conveyor 612 have been moved to the lift wagon conveyor 608 and the lift wagon 608 can then be moved down to the lower grid for a new bin swap. Robots on the grid can then shift the bins from the exit conveyor 614 for further locating and to the in-feed conveyor 612 to be transferred by the lift wagon conveyor 608 in a subsequent operation.

It will be seen that as a result of the system described herein, significantly increased throughput is provided in a multi-grid system, whilst reducing robot waiting time as the in-feed and exit conveyors can be loaded prior to arrival of the lift wagon rather than robots wating to place containers on a lift wagon when it arrives. This is yet further improved by virtue of the provision of both in-feed and exit conveyors cooperating with the lift wagon for optimised transfer.

It will be appreciated that any number of vertically spaced grids can be provided in any vertical configuration and using bin lifts either interior or exterior to the grid main bodies as appropriate. The lift wagon conveyor and in-feed and exit conveyors can carry any appropriate number of containers and be configured appropriately, for example conveying single containers or two or three or more containers. The lift wagon can have the conveyor interior to the rail structure or provided separably or integrally on one or both sides of the rail structure as appropriate.

In another arrangement there is provided a lift wagon for vertically conveying product containers in an automated storage and retrieval system, including a powerable element such as a drive, and a powerable element power supply such as a conveyor drive supply, the powerable element power supply being configured to receive power when the lift wagon is at a lift wagon stop location. As discussed above, such an arrangement permits either power and/or signal to be carried to and from the conveyor minimising the weight of the lift wagon itself.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A lift wagon for vertically conveying product containers in an automated storage and retrieval system, including a horizontal conveyor.

2. A lift wagon as claimed in claim 1 in which the conveyor is configured to receive a plurality of product containers.

3. A lift wagon as claimed in claim 1 or claim 2 further including a conveyor drive.

4. A lift wagon as claimed in claim 3 further comprising a conveyor drive power supply.

5. A lift wagon as claimed in any preceding claim in which the lift wagon comprises a plurality of horizontal conveyors.

6. A lift assembly for an automated storage and retrieval system including a lift wagon as claimed in any preceding claim.

7. A lift assembly as claimed in claim 6 further comprising an insertion and/or extraction conveyor at a lift wagon stop location arranged to convey a product container to and/or from the lift wagon conveyor.

8. A lift assembly as claimed in claim 7 comprising first and second insertion and/or extraction conveyors disposed at opposite ends of the lift wagon conveyor.

9. A lift assembly as claimed in claim 7 or claim 8 in which the insertion and/or extraction conveyor is configured to receive a plurality of product containers.

10. A lift assembly as claimed in any of claims 6 to 9 further including a conveyor drive power supply or power supply charger at a lift wagon stop location and/or further including a lift wagon signal connection at a lift wagon stop location.

11. An automated storage and retrieval system including the lift assembly of any of claims 6 to 10.

12. An automated storage and retrieval system as claimed in claim 11 comprising a first product container storage section and a second product container storage section vertically spaced therefrom, in which the lift assembly is arranged to lift the lift wagon between the sections.

13. An automated storage and retrieval system as claimed in claim 11 or 12 comprising insertion and/or extraction conveyors disposed on a product container storage section at a lift wagon stop location.

14. A method of conveying product containers between a first product container storage section and a second product container storage section vertically spaced therefrom, comprising conveying a product container from an insertion conveyor to a lift wagon conveyor, lifting the lift wagon between storage sections and conveying the product container from the lift wagon conveyor to an extraction conveyor.

15. A method as claimed in claim 14 further comprising supplying power and /or signal to or from the lift wagon at a lift wagon stop location.
